# EUROPÄISCHE PATENTANMELDUNG

(11) **EP 2 884 235 A1**
(43) Veröffentlichungstag der Anmeldung: **17.06.2015**
(21) Anmeldenummer: 14197712.4
(22) Anmeldetag: 12.12.2014
(51) Int. Cl.: G01D 5/20

(54) **Induktiver Sensor auf Basis des Noniusprinzips**

(30) Priorität: 13.12.2013 DE 102013225873
(71) Anmelder: Continental Teves AG & Co. oHG, 60488 Frankfurt (DE)
(72) Erfinder: Schirling, Andreas, 64285 Darmstadt (DE); Stählin, Ulrich, 65760 Eschborn (DE)

(57) **Zusammenfassung**

Sensor (2), insbesondere Drehwinkelsensor, zum Erfassen der Position eines bewegenden Elements innerhalb eines Bewegungsbereichs des Elements, aufweisend:
- eine Erregerspule (20), welche mit einer Wechsel-spannung (U∼) versorgt wird, um ein zur Wechselspannung korrespondierendes Erregerfeld zu erzeugen,
- mindestens eine Empfangsspule (40a, 40b), die mit der Erregerspule (20) derart gekoppelt sind, so dass das Erregerfeld in der Empfangsspule (40a, 40b) eine Spannung (Uout1, Uout2) induziert, und
- eine Positionsgebereinheit (30), das mit dem bewegenden Element verbindbar ist und durch eine relative Bewegung der Positionsgebereinheit (30) zu den Empfangsspulen (40a, 40b) innerhalb eines Messbereichs eine periodische Spannung in der Empfangsspule erzeugbar ist,
dadurch gekennzeichnet, dass mittels der Positionsgebereinheit (30) und / oder der Empfangsspule (40a, 40b) unterschiedlich große Messbereiche definiert werden, die einen Bruchteil des Bewegungsbereichs betragen.

## Beschreibung

Die Erfindung betrifft einen Sensor, insbesondere Drehwinkelsensor, zum Erfassen der Position eines bewegenden Elements innerhalb eines Bewegungsbereichs des Elements gemäß dem Oberbegriff des Anspruchs 1.

Aus der EP 1 828 722 B1 ist ein induktiver Positionsdetektor mit einer ersten induktiven Einrichtung und einer zweiten induktiven Einrichtung bekannt, wobei die erste induktive Einrichtung einen passiven Resonanzkreis umfasst und die zweite induktive Einrichtung die Messstrecke definiert und mindestens zwei Empfangswindungen umfasst. Die zweite induktive Einrichtung ist so konfiguriert, dass sie im Gebrauch einen Wechselstrom in dem passiven Resonanzkreis induziert, sodass der in dem passiven Resonanzkreis induzierte Wechselstrom infolge der gegenseitigen Induktivität zwischen den Empfangswindungen und dem passiven Resonanzkreis ein Wechselsignal in jeder Empfangswindung induziert, wobei diese Signale bezeichnend sind für die Position der ersten induktiven Einrichtung auf der Messstrecke. Für viele Anwendungsfälle ist es notwendig die Position eines sich bewegenden Elements eindeutig und möglichst präzise zu erfassen.

Davon ausgehend liegt der Erfindung daher die Aufgabe zu Grunde, einen Sensor auf Basis des induktiven Messprinzips aufzuzeigen, der eine eindeutige und möglichst präzise Positionserfassung ermöglicht.

Die Aufgabe wird durch die Merkmale des unabhängigen Anspruchs gelöst. Bevorzugte Ausführungsformen sind Gegenstand der abhängigen Ansprüche.

Der Erfindung liegt der Grundgedanke des Noniusprinzips zugrunde. Der Bewegungsbereich des Elements wird in mehrere Messbereiche unterteilt, wobei die in den einzelnen Messbereichen gewonnenen Informationen zur eindeutigen Positionserfassung kombiniert werden.

Der Bewegungsbereich umfasst dabei den Bereich, innerhalb dessen sich das zu erfassende bewegende Element bewegt. Die Messbereiche umfassen nur einen bspw. einen Bruchteil des gesamten Bewegungsbereichs und wiederholen sich innerhalb des Bewegungsbereichs. Es kann aber auch ein Messbereich vorgesehen sein, der dem Bewegungsbereich entspricht. Innerhalb eines Messbereichs ist es möglich einen eindeutigen Rückschluss auf die Position des sich bewegenden Elements zu schließen. Die Größe der Messbereiche ist beispielsweise so ausgelegt, dass ein Messbereich über die Hälfte des Bewegungsbereiches eindeutig misst, wogegen ein anderer Messbereich über ein Viertel des Bewegungsbereiches eindeutig misst. Bei einem Drehwinkelsensor kann dieser Bereich beispielsweise 360° betragen. Ein bewegendes Element wäre in solch einem Fall beispielsweise eine Welle. Ein großer Bereich ist daher vorteilhaft zur feststellen der absoluten Position in Bezug auf den gesamten Bewegungsbereich, hat aber den Nachteil einer größeren Ungenauigkeit. Kleinere Messbereiche haben zwar den Nachteil, dass die Absolute Position nicht unmittelbar festgestellt werden kann, aber den Vorteil der höheren Genauigkeit. Die Kombination beider Merkmale ermöglicht sowohl eine absolute als auch eine präzise Messung der Position des sich bewegenden Elements.

Die Positionsgebereinheit ist mit dem zu vermessenden Element, beispielsweise eine rotierende Welle oder ein Torsionselement, verbunden und gibt die Bewegung bzw. Verformung dieses Elements wieder. Die Positionsgeberelemente sind auf einem Trägerkörper der Positionsgebereinheit angeordnet, so dass durch die relative Anordnung der Positionsgeberelemente auf dem Trägerkörper Rückschlüsse der Position der Positionsgebereinheit bzw. des sich bewegenden Elements möglich sind. Die Positionsgebereinheit ist ein von der Erregerspule und den Empfangsspulen separates Teil, das bspw. parallel benachbart zu den Spulen angeordnet ist.

Eine vorteilhafte Ausführungsform des erfindungsgemäßen Sensors ist derart ausgebildet, dass die Positionsgebereinheit einen oder mehrere Positionsgeberelemente aufweist, die einem Messbereich zugeordnet sind. Auf diese Weise ist eine eindeutige Unterscheidung zwischen den unterschiedlichen Messbereichen besonders einfach möglich.

Eine vorteilhafte Ausführungsform des erfindungsgemäßen Sensors ist derart ausgebildet, dass jedem Positionsgeberelement mindestens eine Empfangsspule zugeordnet ist. Die Empfangsspulen und die Positionsgeberelemente bilden eine Einheit, die einen Messbereich abdecken. Mit mehreren Einheiten können unterschiedlichen Messbereiche abgedeckt werden.

Eine vorteilhafte Ausführungsform des erfindungsgemäßen Sensors ist derart ausgebildet, dass die Positionsgeberelemente in unterschiedlichen Bewegungsbahnen angeordnet sind. Die Bewegungsbahn einspricht einer Spur entlang des Messweges. Ein kreisförmiger Messweg, z. B. zur Winkelmessung, kann in mehrere Bahnen mit unterschiedlichen Radien unterteilt sein. Auf diese Weise ist eine besonders einfach mechanische und induktiv stabile Anordnung der Positionsgeberelemente möglich.

Eine vorteilhafte Ausführungsform des erfindungsgemäßen Sensors ist derart ausgebildet, dass die Empfangsspulen in unterschiedlichen Bewegungsbahnen angeordnet sind. Diese Ausführungsform ist besonders in Kombination mit der vorgenannten Ausführungsform vorteilhaft. Es ist aber nicht zwingend notwendig beide Ausführungsformen miteinander zu kombinieren.

Eine vorteilhafte Ausführungsform des erfindungsgemäßen Sensors ist derart ausgebildet, dass jede Empfangsspule mehrere durch einen Wicklungsabschnitt eingegrenzte Messfelder aufweist, wobei die Messfelder der Empfangsspulen unterschiedliche Längen aufweisen. Ein Messfeld entspricht dabei einen von mehreren Wicklungsabschnitten eingeschlossenen Bereich, der aber bspw. an den Anschlusspunkten der Wicklung offen sein kann. Die Länge kann beispielsweise über die äußersten Punkte oder über die Länge des Bewegungsbereichs, z. B. 360°, durch die Anzahl der Messfelder bestimmt werden.

Eine vorteilhafte Ausführungsform des erfindungsgemäßen Sensors ist derart ausgebildet, dass die Länge des Messbereichs mittels der Länge des Messfeldes festgelegt wird.

Eine vorteilhafte Ausführungsform des erfindungsgemäßen Sensors ist derart ausgebildet, dass die Positionsgeberelemente derart mit der Empfangsspule zusammenwirken, dass die Position der Positionsgeberelemente jeweils innerhalb eines dazu korrespondierenden Messbereichs eindeutig ermittelbar ist.

Eine vorteilhafte Ausführungsform des erfindungsgemäßen Sensors ist derart ausgebildet, dass die Positionsgeberelemente derart mit der Empfangsspule zusammenwirken, dass die Spannung der Empfangsspulen unterschiedliche Messbereiche abdeckt.

Eine vorteilhafte Ausführungsform des erfindungsgemäßen Sensors ist derart ausgebildet, dass die Ausgangsspannungen bzw. Spannungen einen periodischen Spannungsverlauf aufweisen, der für jede Position innerhalb des jeweils zugeordneten Messbereichs einen eindeutigen Spannungswert aufweist.

Eine vorteilhafte Ausführungsform des erfindungsgemäßen Sensors ist derart ausgebildet, dass jede Position des Bewegungsbereichs mittels einer Kombination der Spannungen der Empfangsspulen eindeutig ermittelbar ist.

Eine vorteilhafte Ausführungsform des erfindungsgemäßen Sensors ist derart ausgebildet, dass das Positionsgeberelement einen elektromagnetischen Schwingkreis mit einer eigenen Eigenfrequenz aufweist. Es ist auch möglich das Noniusprinzip derart auszuführen, dass die Positionsgeberelemente nicht örtlich voneinander getrennt sind, sondern mittels unterschiedlicher Eigenfrequenzen voneinander unterschieden werden. Die Erfindung umfasst auch die Kombination der örtlichen Trennung und der Trennung mittels Eigenfrequenzen. Bei einer rein örtlichen Trennung können die Eigenfrequenzen der Schwingkreise auch identisch sein.

Eine vorteilhafte Ausführungsform des erfindungsgemäßen Sensors ist derart ausgebildet, dass die Wechselspannung eine Spannungsfrequenz aufweist, die in variabel einstellbar ist.

Eine vorteilhafte Ausführungsform des erfindungsgemäßen Sensors ist derart ausgebildet, dass die Spannungsfrequenz in Abhängigkeit der Eigenfrequenz der Schwingkreise eingestellt wird.

Eine vorteilhafte Ausführungsform des erfindungsgemäßen Sensors ist derart ausgebildet, dass das Positionsgeberelement einen Stromleiter mit einem periodischen Verlauf aufweist.

Eine vorteilhafte Ausführungsform des erfindungsgemäßen Sensors ist derart ausgebildet, dass sich die Periodenlängen der Stromleiter der Positionsgeberelemente voneinander unterscheiden.

Eine vorteilhafte Ausführungsform des erfindungsgemäßen Sensors ist derart ausgebildet, dass die Positionsgeberelemente ringförmig ausgebildet sind und einen Radius aufweisen, der sich voneinander unterscheidet.

Eine vorteilhafte Ausführungsform des erfindungsgemäßen Sensors ist derart ausgebildet, dass die Positionsgeberelemente jeweils einen Anfangs- und Endpunkt aufweisen, wobei die Anfangs- und Endpunkte der Positionsgeberelemente, vorzugsweise entlang einer Bewegungsbahn, versetzt voneinander angeordnet sind.

Die Erfindung wird anhand eines Ausführungsbeispiels und Figuren näher beschrieben. Es zeigen:
- Fig. 1: eine schematische Schaltungsanordnung mit einem ersten Ausführungsbeispiel des erfindungsgemäßen Sensors,
- Fig. 2: eine schematische Darstellung eine Erregerspule und mehreren Empfangsspulen,
- Fig. 3: eine schematische Darstellung einer Positionsgebereinheit.

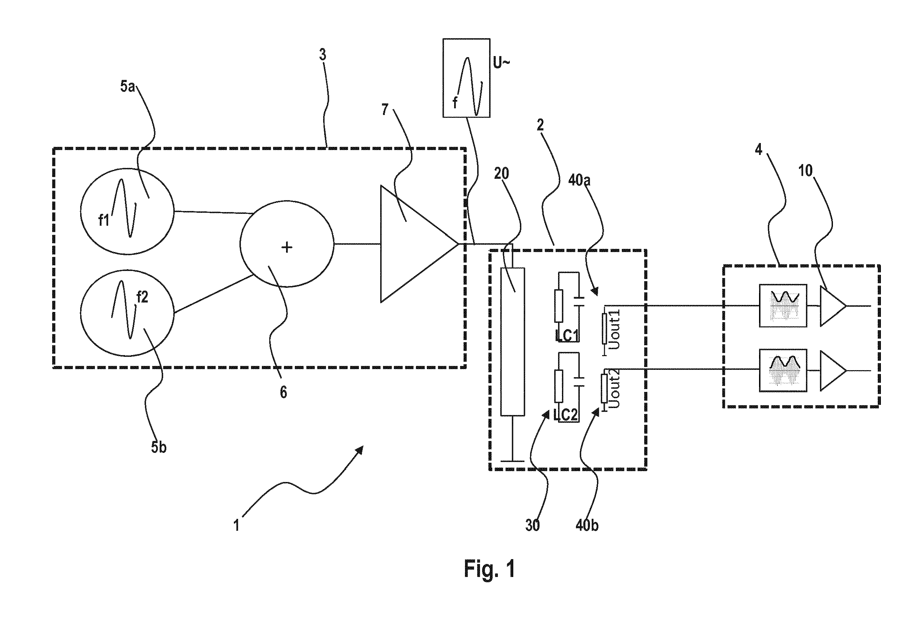

Figur 1 zeigt eine Schaltungsanordnung 1 zum Betreiben eines erfindungsgemäßen Sensors 2 in einer schematischen Darstellung. Die Schaltungsanordnung weist eine Spannungsquelle 3, den Sensor 2 sowie eine Auswerteeinheit 4 auf.

Die Spannungsquelle 3 ist mit der Erregerspule 20 elektrisch verbunden und versorgt diese mit einer Wechselspannung U∼ zum erzeugen eines zur Wechselspannung U∼ korrespondierenden Erregerfeldes. Die Wechselspannung U∼ weist eine Spannungsfrequenz auf f, die variabel einstellbar ist und in unterschiedliche Spannungsfrequenzen bzw. Frequenzen einstellbar ist. Die Wechselspannung kann beispielsweise abwechselnd in unterschiedliche Frequenzen eingestellt werden. Dies kann derart erfolgen, dass die Spannungsfrequenz f mittels Addition mehrerer Spannungsfrequenzen f1, f2 eingestellt wird. Hierzu weist die Spannungsquelle 3 zunächst zwei Wechselspannungserzeuger 5a und 5b auf, die jeweils eine Wechselspannung in unterschiedlichen Frequenzen f1, f2 erzeugen. Diese Ausgestaltung hat den Vorteil, dass die Wechselspannung U∼ leicht durch Variierung der Summenteile veränderbar ist. Die Ausgangssignale der Spannungserzeuger 5a und 5b werden einem Addierer 6 zugeführt. Die Summe der Ausgangssignale werden einer Treibereinheit 7 zugeführt, der aus diesem Signal die Wechselspannung U∼ erzeugt und diese der Erregerspule 20 zuführt. Es ist jedoch auch denkbar andere bereits bekannte Lösungen zur Erzeugung einer Wechselspannung in unterschiedlichen Frequenzen zu verwenden. Ferner kann die Wechselspannung auch in einer einzigen Frequenz f zugeführt werden.

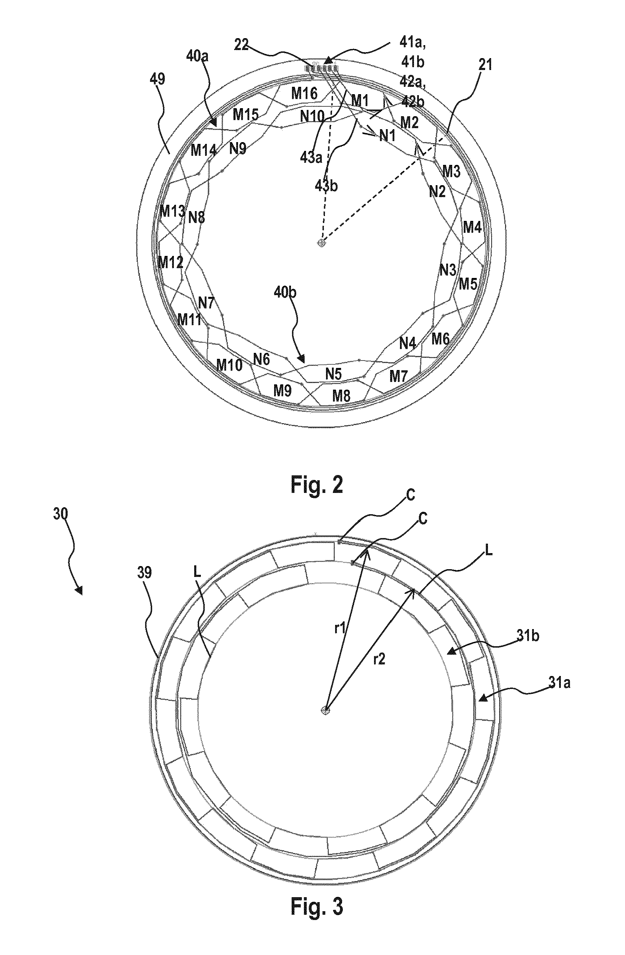

Der Drehwinkelsensor 2 umfasst im Wesentlichen die Erregerspule 20, eine Positionsgebereinheit 30 und zwei Empfangsspulen 40a, 40b. In Figur 1 ist die Anordnung der Erregerspule 20, der Winkelgebereinheit 30 und der Empfangsspulen 40a, 40b schematisch dargestellt. In einer bevorzugten Anordnung sind die Empfangsspulen und die Erregerspule auf einem Trägerkörper 49 angeordnet und die Positionsgebereinheit 30 parallel benachbart zu den Spulen bzw. deren Trägerkörper angeordnet. Dies gilt auch für die nachfolgenden Ausführungsbeispiele entsprechend. Die in den Figuren 2 und 3 gezeigten Ausführungsbeispiele dienen dazu, um einen Drehwinkel zu messen. Prinzipiell ist der Aufbau aber auch auf einen Wegmesssensor zum messen eines bspw. linearen Weges anwendbar.

Die Erregerspule 20 ist vorzugsweise als eine auf einer Leiterplatine aufgedruckte Leiterbahn ausgebildet und um die Empfangsspulen 40a, 40b herum angeordnet. Die Erregerspule 20 weist eine Wicklung 21 auf, die hier ringförmig ausgebildet ist. Die Leiterbahn bildet die Wicklung der Erregerspule 20. Denkbar sind jedoch auch Ausführungsbeispiele, die sich nur entlang eines Kreissegments oder die geradlinig verlaufen. Das durch die Wechselspannung erzeugte Erregerfeld induziert eine Spannung in den Empfangsspulen 40a, 40b. Die Erregerspule 20 ist über die Anschlusspunkte 22 mit der Spannungsquelle 3 verbunden. Die Erregerspule 20 schließt die Empfangsspulen 40a, 40b ein. Auf diese Weise wird sichergestellt, dass die Empfangsspulen 40a, 40b mit der Erregerspule 20 induktiv gekoppelt sind. Denkbar ist es auch die Wicklung der Erregerspule derart vorzusehen, dass es auch im Innenkreis benachbart zur Empfangsspule 40b verläuft. Dies könnte auch durch eine separate Erregerspule realisiert werden.

Die Empfangsspulen 40a, 40b weisen jeweils eine Wicklung 43a, 43b auf. Die Wicklungen 43a, 43b haben einen trapezförmigen periodischen Verlauf. Denkbar sind auch andere periodische Formen, z. B. Sinus- oder Kosinusform. Die Wicklungen 43a, 43b haben einen Anfangspunkt 41a, 41b. Die Wicklungen 43a, 43b laufen von dort entsprechend ihrer periodischer Form entlang des gesamten Kreisumfangs bis zum anderen Ende des Kreises. Von dort laufen die Wicklungen 43a, 43b wie eine reflektierte Welle zum Anfangspunkt 41a, 41b zurück. Vorzugsweise ist die Periodenlänge der Wicklungen derart ausgeführt, dass ein ganzzahliges Vielfaches der Periode innerhalb des Kreissegments hineinpasst, Das Ende der Wicklung 43a, 43b bildet jeweils ein Endpunkt 42a, 42b. Über die Anfangs- und Endpunkte 41a, 42a, 41b, 42b wird die Ausgasspannung Uout1∼, Uout2∼ von den Empfangsspulen abgegriffen. Es ist denkbar auf jede Bahn mehrere Empfangsspulen in Bewegungsrichtung versetzt zueinander angeordnet sind.

Die Empfangsspulen 40a, 40b weisen mehrere Messfelder M1,...,M16; N1, ..., N10 auf. Die Messfelder haben entsprechend der Laufrichtung der Wicklungen 43a, 43b jeweils eine Wicklungsrichtung. Die Messfelder weisen in diesem Fall eine Wicklungsrichtung entgegen zum Uhrzeigesinn auf. In Figur 2 sind die Wicklung Richtungen durch die Pfeilspitzen auf den Wicklungen gekennzeichnet.

Die Erregerspule 20 und die Empfangsspulen 40a, 40b sind vorzugsweise auf einer Leiterplatine mittels aufgedruckten Leiterbahnen ausgebildet. Der Trägerkörper, in dem Fall die Leiterplatine, ist kreissegmentförmig 49 ausgebildet. Vorteilhafterweise nicht wesentlich größer, das der Bereich, den die Erregerspule 20 einnimmt.

Figur 3 zeigt eine schematische Darstellung der Positionsgebereinheit 30, in diesem Fall für eine Drehwinkelmessung. Die Positionsgebereinheit 30 weist mehrere Positionsgeberelemente 31a, 31b auf, die als elektromagnetische Schwingkreise ausgebildet sind. Die Schwingkreise umfassen einen Kondensator C und ein induktives Element L in Form einer Leiterbahn oder eines Stromleiters. Die Schwingkreise sind auf einem Trägerkörper 39 angeordnet, der mit dem sich bewegenden Element verbunden ist, um somit die Bewegung dieses Elements wiedergibt. Es ist anstatt eines Schwingkreises nur einen Stromleiter zu verwenden

Der Verlauf der Stromleiter bildet sich aus sich wiederholenden rechtechteckformen ab. Die Periodenlängen der Stromleiter unterschiedlicher Positionsgeberelemente 31a, 31b unterscheiden sich voneinander. Die Periodenlänge des Stromleiters des außen angeordneten Positionsgeberelements 31a ist länger. Die Stromleiter verlaufen vergleichbar zu den Empfangsspulen 40a, 40b von einem Anfangspunkt, wo die Kondensatoren C positioniert sind, gemäß ihrer periodischen Form zum Endpunkt. Von dort laufen sie in einer einfachen Kreisform zurück zum Endpunkt, der sich neben dem Anfangspunkt befindet. Anfangs- und Endpunkt sind durch den Kondensator definiert.

Die Positionsgeberelemente 31a, 31b sind ringförmig ausgebildet sind, so dass die Stromleiter sich entlang des gesamten Kreisumfangs erstrecken. Die Radien r1, r2 der Positionsgeberelemente 31a, 31b sind unterschiedlich. Die Radien r1, r2 sind derart ausgewählt, dass sie mit den jeweiligen Empfangsspulen 40a, 40b zusammenwirken können, wenn die Trägerkörper 29, 39 der Positionsgebereinheit und der Spulen nebeneinander und konzentrisch zueinander angeordnet werden. Es ist jedoch auch denkbar nur eine Empfangsspule 40a zu verwenden, die sich über beide Radien erstreckt und somit mit beiden Positionsgeberelementen 31a, 31b zusammenwirken kann.

Die Anfangs- und Endpunkte der Positionsgeberelemente sind versetzt voneinander angeordnet sind. In diesem Fall sind die Kondensatoren Winkelversetzt zueinander angeordnet. Die Schwingkreise müssen nicht zwangsläufig um den Kreisumfang umlaufend ausgebildet sein. Es ist auch möglich bspw. viereckige LC Schwingkreise zu bilden, die in unterschiedlichen Bahnen angeordnet sind.

Die Eigenfrequenz der Schwingkreise können über die Kapazität des Kondensators K, der Induktivität des induktiven Elements und durch die Verlaufsform des Stromleiters beeinflusst werden. Um die Schwingkreise voneinander zu unterscheiden, können sie in unterschiedlichen Bewegungsbahnen angeordnet sein. Alternativ können die Eigenfrequenzen zueinander unterschiedlich ausgelegt sein. In diesem Fall würde man die Spannungsfrequenz f der Wechselspannung entsprechend der Eigenfrequenz einstellen.

Die Auswerteeinheit 4 ist mit den Empfangsspulen 40a, 40b verbunden und wertet die Ausgangsspannungen Uout1, Uout2 der Empfangsspulen 40a, 40b aus. Die Ausgangsspannungen Uout1, Uout2 der Empfangsspulen 40a, 40b werden mittels Demodulatoren 10 verarbeitet. Als Ausgangsspannung wird in der Regel ein sinus- oder kosinusförmiger Spannungsverlauf ausgegeben. Andere Spannungsverläufe sind möglich, bspw. dreiecksförmige.

Die Positionsgeberelemente wirken derart mit der Empfangsspule zusammen, dass die Position der Positionsgeberelemente jeweils innerhalb eines dazu korrespondierenden Messbereichs eindeutig ermittelbar ist. Zwei Messfelder, bspw. M1, M2, bilden einen Messbereich ab. Damit unterteilt die Empfangsspule 43a den Bewegungsbereich von 360° in insgesamt 8 gleich große Messbereiche, so dass die Bewegung der Positionsgebereinheit 30 innerhalb von 40° des Kreissegments (dargestellt durch die gestrichelten Linien), in der sich M1 und M2 befinden eindeutig festgelegt werden kann. Jede Position innerhalb des Messbereichs von M1 und M2 kann anhand eines einen eindeutigen Spannungswertes identifiziert werden. Die Messfelder N10 und N1 unterteilen den Bewegungsbereiche entsprechend in mehrere Messbereiche N1,...,N10. Ein Messbereich der Empfangsspule 40b umfasst 360°/5 = 72°. Entsprechend zur Empfangsspule 40a, kann auch jede des sich Position der Positionsgebereinheit 30 innerhalb des Messbereichs von N1 und N2 anhand eines einen eindeutigen Spannungswertes identifiziert werden. Die Spannungen der Empfangsspulen 40a, 40b decken also unterschiedliche Messbereiche ab. Da sich die Kreissegmente der Messfelder sich jeweils überlappen, ist es möglich mittels Kombination der Spannungswerte die Position der Positionsgebereinheit 30 präziser und absolut in Bezug festzustellen. Insbesondere ist es Vorteilhaft mittels einer Empfangsspule einen Messbereich von 360° abzudecken.

Die Erfindung ist nicht auf die vorgenannten Ausführungsbeispiele beschränkt. Die vorgenannten Ausführungsbeispiele der Erregerspule, Empfangsspulen sind mit den Ausführungsbeispielen der Winkelgebereinheit beliebig kombinierbar.

Es ist ferner möglich, den Drehwinkelsensor mit einer einfachen Schaltungsanordnung zu verwenden, die mit einer einzigen Wechselspannungsfrequenz betrieben wird. Des Weiteren ist die Auswerteeinheit 4 nicht auf das oben genannte Ausführungsbeispiel beschränkt, sondern kann durch weitere Auswerteelektronik ergänzt werden. Ferner können die Ausführungsbeispiele in einer einfachen Ausführung auch mit einer Wechselspannung in einer Frequenz realisiert werden.

## Patentansprüche

1. Sensor (2), insbesondere Drehwinkelsensor, zum Erfassen der Position eines bewegenden Elements innerhalb eines Bewegungsbereichs des Elements, aufweisend:
- eine Erregerspule (20), welche mit einer Wechselspannung (U~) versorgt wird, um ein zur Wechselspannung korrespondierendes Erregerfeld zu erzeugen,
- mindestens eine Empfangsspule (40a, 40b), die mit der Erregerspule (20) derart gekoppelt sind, so dass das Erregerfeld in der Empfangsspule (40a, 40b) eine Spannung (Uout1, Uout2) induziert, und
- eine Positionsgebereinheit (30), das mit dem bewegenden Element verbindbar ist und durch eine relative Bewegung der Positionsgebereinheit (30) zu den Empfangsspulen (40a, 40b) innerhalb eines Messbereichs eine periodische Spannung in der Empfangsspule erzeugbar ist,
**dadurch gekennzeichnet, dass** mittels der Positionsgebereinheit (30) und / oder der Empfangsspule (40a, 40b) unterschiedlich große Messbereiche definiert werden, die einen Bruchteil des Bewegungsbereichs betragen.

2. Sensor (2)nach Anspruch 1, **dadurch gekennzeichnet, dass** die Positionsgebereinheit (30) einen oder mehrere Positionsgeberelemente (31a, 31b) aufweist, die einem Messbereich zugeordnet sind.

3. Sensor (2) nach einem der vorstehenden Ansprüche, **dadurch gekennzeichnet, dass** jedem Positionsgeberelement (31a, 31b) mindestens eine Empfangsspule (40a, 40b) zugeordnet ist.

4. Sensor (2) nach einem der vorstehenden Ansprüche, **dadurch gekennzeichnet, dass** die Positionsgeberelemente (31a, 31b) in unterschiedlichen Bewegungsbahnen (r1, r2) angeordnet sind.

5. Sensor (2) nach einem der vorstehenden Ansprüche, **dadurch gekennzeichnet, dass** die Empfangsspulen (40a, 40b) in unterschiedlichen Bewegungsbahnen angeordnet sind.

6. Sensor (2) nach einem der vorstehenden Ansprüche, **dadurch gekennzeichnet, dass** jede Empfangsspule (40a, 40b) mehrere durch einen Wicklungsabschnitt eingegrenzte Messfelder (M1,...,M16; N1,...,N10) aufweist, wobei die Messfelder der Empfangsspulen (40a, 40b) unterschiedliche Längen aufweisen.

7. Sensor (2) nach einem der vorstehenden Ansprüche, **dadurch gekennzeichnet, dass** die Länge des Messbereichs mittels der Länge des Messfeldes festgelegt wird.

8. Sensor (2) nach einem der vorstehenden Ansprüche, **dadurch gekennzeichnet, dass** die Positionsgeberelemente derart mit der Empfangsspule (40a, 40b) zusammenwirken, dass die Position der Positionsgeberelemente (31a, 31b) jeweils innerhalb eines dazu korrespondierenden Messbereichs eindeutig ermittelbar ist.

9. Sensor (2) nach einem der vorstehenden Ansprüche, **dadurch gekennzeichnet, dass** die Ausgangsspannungen (Uout1, Uout2) einen periodischen Spannungsverlauf aufweisen, der für jede Position innerhalb des jeweils zugeordneten Messbereichs einen eindeutigen Spannungswert aufweist.

10. Sensor (2) nach einem der vorstehenden Ansprüche, **dadurch gekennzeichnet, dass** die Positionsgeberelemente (31a, 31b) derart mit der Empfangsspule (40a, 40b) zusammenwirken, dass die Spannung der Empfangsspulen (40a, 40b) unterschiedliche Messbereiche abdeckt.

11. Sensor (2) nach einem der vorstehenden Ansprüche, **dadurch gekennzeichnet, dass** jede Position des Bewegungsbereichs mittels einer Kombination der Spannungen der Empfangsspulen (40a, 40b) eindeutig ermittelbar ist.

12. Sensor (2) nach einem der vorstehenden Ansprüche, **dadurch gekennzeichnet, dass** das Positionsgeberelement (31a, 31b) einen elektromagnetischen Schwingkreis mit einer eigenen Eigenfrequenz aufweist.

13. Sensor (2) nach Anspruch 12, **dadurch gekennzeichnet, dass** die Wechselspannung eine Spannungsfrequenz (f) aufweist, die in variabel einstellbar ist.

14. Sensor (2) nach Anspruch 13, **dadurch gekennzeichnet, dass** die Spannungsfrequenz (f) in Abhängigkeit der Eigenfrequenz der Schwingkreise (LC) eingestellt wird.

15. Sensor (2) nach einem der vorstehenden Ansprüche, **dadurch gekennzeichnet, dass** das Positionsgeberelement einen Stromleiter mit einem periodischen Verlauf aufweist.
